# FASCICULE DE BREVET EUROPEEN

(11) **EP 0 403 339 B1**
(45) Date de publication et mention de la délivrance du brevet: **05.04.1995**
(21) Numéro de dépôt: 90401568.2
(22) Date de dépôt: 08.06.1990
(51) Int. Cl.: H04Q 7/20, H04B 7/26, H04Q 7/38

(54) **Base de transmission pour un dispositif de communication radio téléphonique**
Übertragungs-Basisstation für eine Einrichtung für Funktelefonkommunikation
Transmission base for a radio telephonic communication arrangement

(30) Priorité: 12.06.1989 FR 8907722
(43) Date de publication de la demande: 19.12.1990
(73) Titulaire: MATRA COMMUNICATION, 29101 Quimper (FR)
(72) Inventeur: Alard, Michel, F-75014 Paris (FR); Foure, Jean-Luc, F-92380 Garches (FR)
(74) Mandataire: Fruchard, Guy

(56) Documents cités:
- EP-A- 0 097 541
- EP-A- 0 233 963
- COMMUTATION & TRANSMISSION vol. 10, no.2, 1988, Paris (FR) pages 5 - 14; P.DUPLESSIS et al: "Le Sytème Cellulaire Numérique Paneuropéen de Radiotéléphonie avec les Mobiles"

## Description

La présente invention concerne une base de transmission pour un dispositif de communication radio téléphonique comme divulgé par example dans le document EP-A-0097541.

On connaît des dispositifs de communication radio téléphonique qui comportent une pluralité de bases de transmission implantées de façon fixe, reliées à un réseau téléphonique et destinées à assurer une liaison radio avec une série de stations mobiles se déplaçant sur le territoire couvert par le dispositif de communication radio téléphonique. Dans les dispositifs connus, une base de transmission comporte au moins une antenne réceptrice de signaux radio électriques ; un organe de couplage en réception relié à l'antenne réceptrice ; une série d'organes récepteurs reliés à l'organe de couplage en réception ; une série d'unités de traitement numériques chacune reliée à un organe récepteur, à une ligne d'un réseau téléphonique, et à une unité de gestion ; une série d'organes émetteurs chacun relié à une unité de traitement numérique ; un organe de couplage en émission relié aux organes émetteurs ; et une antenne émettrice reliée à l'organe de couplage en émission.

On sait par ailleurs que pour assurer une sécurité de transmission entre la base de transmission et les stations mobiles quels que soient les obstacles radio électriques existants entre la base de transmission et les stations mobiles, tels que des configurations de terrain défavorables ou certaines constructions formant un écran radio électrique, il est souhaitable de procéder à une émission avec des sauts de fréquences, chaque fréquence étant affectée d'une façon différente par les obstacles radio électriques.

Pour pouvoir effectuer des sauts de fréquence avec les bases de transmission existantes dont la structure a été rappelée ci-dessus, il est nécessaire que l'organe de couplage en émission soit un organe à large bande fonctionnant dans le mode hybride. De tels organes de couplage présentent l'inconvénient d'entraîner des pertes de puissance qui sont fonction du nombre d'étages de la base de transmission de sorte qu'il est nécessaire de prévoir une puissance initiale très importante pour des bases de transmission devant assurer simultanément la transmission d'un grand nombre de communications.

Afin de réduire la puissance requise tout en assurant des sauts de fréquence, on a envisagé de regrouper les organes récepteurs et les organes émetteurs dans des modules communs associés à un couplage fonctionnant dans un mode à cavités. Un tel dispositif requiert toutefois la mise en place d'une matrice de commutation extrêmement complexe pour assurer la liaison entre les modules émetteurs-récepteurs d'une part et les unités de traitement numériques d'autre part.

Un but de la présente invention est de proposer une base de transmission de structure relativement simple pouvant aisément fonctionner en liaison avec un organe de couplage en émission du type à large bande ou à cavités.

En vue de la réalisation de ce but, on propose selon l'invention une base de transmission pour un dispositif de communication radio électrique, cette base de transmission comportant au moins une antenne réceptrice de signaux radio électriques ; un organe de couplage en réception relié à l'antenne réceptrice ; une série d'organes récepteurs reliés à l'organe de couplage en réception ; une série d'unités de traitement numériques chacune reliée à un organe récepteur, à une ligne d'un réseau téléphonique et à une unité de gestion ; une série d'organes émetteurs reliés aux unités de traitement numériques ; un organe de couplage en émission relié aux organes émetteurs ; et une antenne émettrice reliée à l'organe de couplage en émission; dans lequel les unités de traitement numériques sont reliées aux organes émetteurs par une série de lignes de liaison, chaque ligne de liaison étant reliée d'une part à une unité de traitement numérique et d'autre part aux organes émetteurs selon des connexions parallèles, et dans lequel chaque organe émetteur comporte un organe de commutation commandant la mise en communication de l'organe émetteur associé avec l'une des lignes de liaison.

Selon un mode de réalisation de l'invention dans lequel l'organe de couplage en émission est du type à cavités, chaque organe émetteur étant adapté à transmettre un signal à une fréquence fixe, chaque organe de commutation comporte des moyens de détection de messages de transmission provenant d'une des unités de traitement numérique et contenant des données à transmettre à la fréquence de l'organe émetteur auquel l'organe de commutation est associé, et assure la mise en communication de l'organe émetteur concerné avec la ligne de liaison correspondante.

Selon un mode de réalisation avantageux de l'invention dans lequel l'organe de couplage en émission est du type à cavités et dans lequel une émission permanente doit être assurée à une fréquence balise, l'organe émetteur associé à la fréquence balise assure une émission utile chaque fois que des données à transmettre à la fréquence balise sont présentes sur une ligne de liaison, et une émission de bourrage lorsqu'aucune donnée à transmettre à la fréquence balise n'est présente sur l'une des lignes de liaison.

Selon un mode de réalisation de l'invention dans lequel l'organe de couplage en émission est du type hybride, chaque organe de commutation assure une connexion permanente avec l'une des lignes de liaison.

Selon une version avantageuse de l'invention dans laquelle des émissions sont faites à un nombre de fréquences supérieur au nombre d'unités de traitement numériques, l'organe de couplage en émission est du type hybride, et une émission permanente doit être assurée à une fréquence balise, la base de transmission comporte un organe émetteur balise en plus des organes émetteurs associés aux unités de traitement numériques, l'organe émetteur balise étant associé à un organe de commutation comportant des moyens de détection de messages de transmission en provenance de l'ensemble des unités de traitement numériques et commandant une émission de bourrage à la fréquence balise lorsqu'aucun des autres organes émetteurs n'émet de signal sur la fréquence balise.

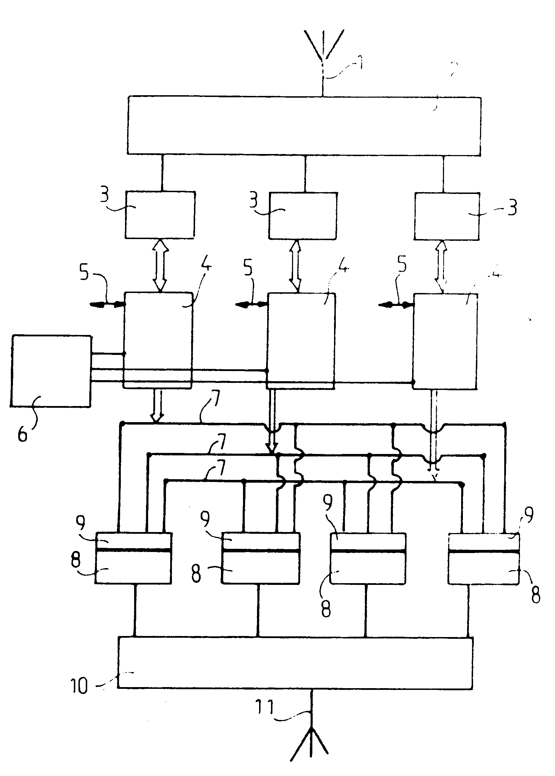

D'autres caractéristiques et avantages de l'invention apparaîtront à la lecture de la description qui suit d'un mode de réalisation préféré non limitatif de l'invention en liaison avec la figure unique ci-jointe qui illustre de façon schématique la structure d'une base de transmission selon l'invention.

En référence à la figure, la base de transmission selon l'invention comporte une antenne réceptrice de signaux radio électriques 1 ; un organe de couplage en réception 2 relié à l'antenne réceptrice ; une série d'organes récepteurs 3 reliés à l'organe de couplage en réception.

Dans le mode de réalisation illustré, le nombre d'organes récepteurs a été limité à trois mais ce nombre peut bien entendu être augmenté en fonction du nombre de communications dont la base doit assurer la transmission.

Chacun des organes récepteurs 3 est relié à une unité de traitement numérique 4 elle-même associée à une ligne 5 d'un réseau téléphonique et à une unité de gestion commune 6. L'organe de couplage en réception 2 fonctionne en mode hybride et chacun des organes récepteurs se met à chaque instant à l'écoute d'une onde radio électrique dont la fréquence porteuse lui est communiquée par l'unité de traitement numérique auquel il est associé en fonction de signaux de commande donnés par l'unité de gestion dans laquelle les règles de sauts de fréquence ont été introduites lors de la mise en route de la base de transmission. Les organes récepteurs 3 sont donc ainsi en mesure d'effectuer d'une façon classique l'amplification et la conversion en signaux numériques des signaux radio électriques reçus tandis que les unités de traitement numériques assurent le décodage et la transmission sur le réseau téléphonique des signaux numériques reçus qui regroupent eux-mêmes plusieurs communications téléphoniques selon des règles de multiplexage dans le temps connues en elles-mêmes.

Par ailleurs, chacune des unités de traitement numériques 4 est reliée à une ligne d'une série de lignes de liaison 7 disposées en parallèle pour envoyer des messages de transmission à des organes émetteurs 8. Chaque message de transmission comporte des données à émettre, l'indication de la fréquence à laquelle ces données doivent être émises et, le cas échéant, d'autres informations telle que la puissance d'émission. Les organes émetteurs 8 sont chacun reliés à l'ensemble des lignes de liaison selon des connexions parallèles par l'intermédiaire d'organes de commutation 9 servant à commander la mise en communication de l'organe émetteur associé avec l'une des lignes de liaison 7. Les organes émetteurs 8 sont reliés à un organe de couplage en émission 10 lui-même associé à une antenne émettrice 11.

Dans le mode de réalisation préféré de l'invention, l'organe de couplage en émission 10 est du type à cavités, c'est à dire que chaque organe émetteur 8 associé à l'organe de couplage 10 est adapté à transmettre un signal à une fréquence fixe. Dans ce cas, le nombre d'organes émetteurs 8 est fonction du nombre de fréquences fixes auxquelles on souhaite émettre. En particulier, bien que le nombre d'organes émetteurs 8 représenté ait été limité à quatre pour des raisons de simplicité de la figure, ce nombre pourra être augmenté ou réduit en fonction du nombre de fréquences fixes que l'on souhaite utiliser, le nombre minimal étant toutefois égal au nombre d'unités de traitement numériques. Par ailleurs, l'unité de gestion 6 assure une synchronisation des unités de traitement numériques 4 pour qu'à chaque instant une seule des unités de traitement numériques envoie un message de transmission contenant une fréquence d'émission donnée. Les sauts de fréquence sont effectués de façon échelonnée dans le temps par chacune des unités de traitement numériques selon les règles pré-établies introduites dans l'unité de gestion lors de la mise en place de l'installation. Dans ce mode de réalisation, chaque organe de commutation comporte des moyens de détection des messages de transmission en provenance des unités de traitement numériques de façon à déterminer celle des unités de traitement numériques qui doit être connectée à l'émetteur 8 auquel l'organe de commutation est associé. Chaque fois qu'un organe de commutation 9 détecte que des données doivent être transmises à la fréquence de l'organe émetteur auquel il est associé, l'organe de commutation assure la connexion avec la ligne de liaison correspondante.

L'organe émetteur ainsi mis en communication assure de façon conventionnelle le traitement des données et transmet le signal modulé correspondant à l'antenne émettrice 11 qui assure alors une émission modulée utile.

Dans le cas où l'on souhaite assurer une émission permanente à une fréquence balise, cette fréquence balise devant servir de repère aux stations mobiles même en l'absence de transmission de données, l'un des organes émetteurs 8 est bien entendu réglé sur la fréquence balise et cet émetteur assure une émission utile chaque fois qu'un message de transmission contenant des données devant être transmises à la fréquence balise est présent sur une ligne de liaison et une émission de bourrage lorsqu'aucun signal modulé devant être transmis à la fréquence balise n'est présent sur l'une des lignes de liaison. En fonction d'une décision prise lors de l'élaboration de chaque système, l'émission de bourrage est une émission non modulée à la fréquence balise ou une émission modulée en fonction de règles propres au système.

Bien que dans le mode de réalisation préféré, la base de transmission selon l'invention soit utilisée avec un organe de couplage du type à cavités pour réduire la puissance nécessaire à son fonctionnement, la base de transmission selon l'invention peut aisément être adaptée à un fonctionnement avec un organe de couplage en émission 10 du type hybride. Dans ce cas, chaque organe de commutation 9 est commandé pour assurer une connexion permanente avec l'une des lignes de liaison 7 et la base de transmission fonctionne alors de la même façon que les bases de transmission traditionnelles dont la structure a été rappelée au début de la présente description. Dans ce cas, le nombre d'organes émetteurs 8 peut être limité au nombre d'unités de traitement numériques 4. Toutefois, dans le cas où le nombre de fréquences auxquelles les émissions sont faites est supérieur au nombre d'unités de traitement numériques, et l'on souhaite en outre assurer une émission permanente sur une fréquence balise, on prévoit avantageusement un organe émetteur de bourrage 8 en plus des organes émetteurs associés aux unités de traitement numériques. L'organe de commutation 9 associé à l'organe émetteur de bourrage comporte alors des moyens de détection des messages de transmission en provenance de l'ensemble des unités de traitement numériques afin de commander une émission de bourrage à la fréquence balise lorsqu'aucun des autres organes émetteurs n'émet un signal sur la fréquence balise. On remarquera que dans ce cas la base de transmission selon l'invention présente encore un avantage par rapport aux bases de transmission conventionnelles où une ligne complète comprenant un organe récepteur, une unité de traitement numérique et un organe émetteur doit être associé à la fréquence balise.

Bien entendu l'invention n'est pas limitée au mode de réalisation décrit et on peut y apporter des variantes de réalisation sans sortir du cadre de l'invention.

En particulier, bien que dans le mode de réalisation décrit on ait représenté une ligne téléphonique 5 associée à chaque unité de traitement numérique 4, une même ligne téléphonique pourra être associée à plusieurs unités de traitement en fonction des capacités respectives de la ligne téléphonique et des unités de traitement numériques.

## Revendications

1. Base de transmission pour un dispositif de communication radio téléphonique, cette base de transmission comportant au moins une antenne réceptrice de signaux radio électriques (1) ; un organe de couplage en réception (2) relié à l'antenne réceptrice ; une série d'organes récepteurs (3) reliés à l'organe de couplage en réception ; une série d'unités de traitement numériques (4) chacune reliée à un organe récepteur, à une ligne (5) d'un réseau téléphonique, et à une unité de gestion (6) ; une série d'organes émetteurs (8) reliés aux unités de traitement numériques ; un organe de couplage en émission (10) relié aux organes émetteurs (8) ; et une antenne émettrice (11) reliée à l'organe de couplage en émission, caractérisée en ce que les unités de traitement numériques (4) sont reliées aux organes émetteurs (8) par une série de lignes de liaison (7), chaque ligne de liaison étant reliée d'une part à une unité de traitement numérique (4) et d'autre part aux organes émetteurs (8) selon des connexions parallèles, et en ce que chaque organe émetteur (8) comporte un organe de commutation (9) commandant la mise en communication de l'organe émetteur associé avec l'une des lignes de liaison.

2. Base de transmission selon la revendication 1 dans laquelle l'organe de couplage en émission est du type à cavités, chaque organe émetteur étant adapté à transmettre un signal à une fréquence fixe, caractérisée en ce que chaque organe de commutation (9) comporte des moyens de détection de messages de transmission provenant d'une unité de traitement numérique et contenant des données à transmettre à la fréquence de l'organe émetteur auquel l'organe de commutation est associé, et assure la mise en communication de l'organe émetteur concerné avec la ligne de liaison (7) correspondante.

3. Base de transmission selon la revendication 2 dans laquelle une émission permanente doit être assurée à une fréquence balise caractérisée en ce que l'organe émetteur (8) associé à la fréquence balise assure une émission utile chaque fois que des données à transmettre à la fréquence balise sont présentes sur une ligne de liaison et une émission de bourrage lorsqu'aucune donnée à transmettre à la fréquence de bourrage n'est présente sur l'une des lignes de liaison.

4. Base de transmission selon la revendication 1 dans laquelle l'organe de couplage en émission est du type hybride caractérisée en ce que chaque organe de commutation (9) assure un connexion permanente avec une des lignes de liaison (7).

5. Base de transmission selon la revendication 4, dans laquelle des émissions sont faites à un nombre de fréquences supérieur au nombre d'unités de traitement numériques et une émission permanente doit être assurée à une fréquence balise caractérisée en ce qu'elle comprend un organe émetteur de bourrage (8) en plus des organes émetteurs associés aux unités de traitement numériques (4), l'organe émetteur de bourrage étant associé à un organe de commutation comportant des moyens de détection de messages de transmission en provenance de l'ensemble des unités de traitement numériques et commandant une émission de bourrage à la fréquence balise lorsqu'aucun des autres organes émetteurs n'émet un signal sur la fréquence balise.

## Patentansprüche

1. Funkfeststation für eine Funksprechanlage, wobei diese Funkfeststation mindestens eine Empfangsantenne für Funksignale (1) umfaßt; ein empfangsseitiges Kopplungsglied (2), das mit der Empfangsantenne verbunden ist; eine Reihe von Empfangsgeräten (3), die mit dem empfangsseitigen Kopplungsglied verbunden sind; ein Reihe von rechnergestützten Auswerteinheiten (4), von denen jede mit einem Empfangsgerät, einer Leitung (5) eines Fernsprechnetzes und einer Steuereinheit (6) verbunden ist; eine Reihe von Sendegeräten (8), die mit den rechnergestützten Auswerteinheiten verbunden sind; ein senderseitiges Kopplungsglied (10), das mit den Sendegeräten (8) verbunden ist; und eine Sendeantenne (11), die mit dem senderseitigen Kopplungsglied verbunden ist, gekennzeichnet dadurch, daß die rechnergestützten Auswerteinheiten (4) mit den Sendegeräten (8) über eine Reihe von Verbindungsleitungen (7) verbunden sind, wobei jede Verbindungsleitung wiederum zum einen mit einer rechnergestützten Auswerteinheit (4) und zum anderen mit den Sendegeräten (8) über Parallelschaltungen verbunden ist, und dadurch, daß jedes Sendegerät (8) ein Schaltorgan (9) zur Steuerung der Zuschaltung des Sendegeräts enthält, das an eine der Verbindungsleitungen angeschlossen ist.

2. Funkfeststation nach Anspruch 1, in der das senderseitige Kopplungsgerät auf Hohlleitertechnik beruht, wobei jedes Sendegerät so ausgelegt ist, daß es ein Signal auf einer Festfrequenz übermittelt, gekennzeichnet dadurch, daß jedes Schaltorgan (9) über Dekoder für Informationen verfügt, die von einer rechnergestützten Auswerteinheit kommen und Daten enthalten, die auf der Frequenz des Sendegerätes, mit dem Schaltorgan gekoppelt ist, zu übertragen sind, und die Herstellung der Verbindung des betreffenden Sendegeräts zu der jeweiligen Verbindungsleitung (7) gewährleistet.

3. Funkfeststation nach Anspruch 2, bei der ein ständiges Abstrahlen auf einer Pilotfrequenz gewährleistet sein muß, gekennzeichnet dadurch, daß das auf die Pilotfrequenz eingestellte Sendegerät (8) immer dann eine Nutzsendung vornimmt, wenn auf der Pilotfrequenz zu übermittelnde Daten auf einer Verbindungsleitung anliegen, und eine Stopfsendung, wenn keine auf der Pilotfrequenz zu übermittelnde Daten auf einer der Verbindungsleitungen anliegen.

4. Funkfeststation nach Anspruch 1, bei der das senderseitige Kopplungsglied auf Hybridschaltungstechnik beruht, gekennzeichnet dadurch, daß jedes Schaltorgan (9) eine ständige Verbindung zu einer der Verbindungsleitungen (7) gewährleistet.

5. Funkfeststation nach Anspruch 4, bei der das Abstrahlen bei einer Anzahl von Frequenzen erfolgt, die größer ist als die der rechnergestützten Auswerteinheiten, und ein ständiges Abstrahlen auf einer Pilotfrequenz gewährleistet sein muß, gekennzeichnet dadurch, daß sie ein Sendegerät zum Stopfen (8) zusätzlich zu den Sendegeräten enthält, die mit den rechnergestützten Auswerteinheiten (4) verbunden sind, wobei das Sendegerät zum Stopfen mit einem Schaltorgan verbunden ist, das Dekoder für Informationen von allen rechnergestützten Auswerteinheiten enthält, und eine Stopfsendung auf der Pilotfrequenz steuert, wenn keines der anderen Sendegeräte ein Signal auf der Pilotfrequenz abgibt.

## Claims

1. A relay base for a radiotelephone communication system, the base comprising at least one receive antenna (1) for receiving radio signals; a receiver coupling member (2) connected to the receive antenna; a series of receiver members (3) connected to the receiver coupling member; a series of digital processing units (4) connected to respective ones of the receiver members, to a line (5) of a telephone network, and to a control unit (6); a series of transmitter members (8) connected to the digital processing units; a transmitter coupling member (10) connected to the transmitter members (8); and a transmit antenna (11) connected to the transmitter coupling member, the base being characterized in that the digital processing units (4) are connected to the transmitter members (8) via a series of link lines (7), each link line being connected firstly to a digital processing unit (4) and secondly to the transmitter members (8) via parallel connections, and in that each transmitter member (8) includes a switching member (9) controlling a communication of one of the link lines with the associated transmitter member.

2. A base according to claim 1, in which the transmitted coupling member is of the cavity type, with each transmitter member being adapted to transmit a signal at a fixed frequency, characterized in that each switching member (9) includes means for detecting relay messages from a digital processing unit containing data to be transmitted at the frequency of the transmitter member with which the switching member is associated, and for putting the corresponding link line (7) into communication with the transmitter member concerned.

3. A base according to claim 2, in which permanent transmission is to be provided at a beacon frequency, characterized in that the transmitter member (8) associated with the beacon frequency transmits a useful signal each time data is presented on one of the link lines for transmission at the beacon frequency, and transmits a padding signal whenever no data is present on any of the link lines for transmission at the beacon frequency.

4. A base according to claim 1, in which the transmitter coupling member is of the hybrid type, the base being characterized in that each switching member (9) establishes a permanent connection with one of the link lines (7).

5. A base according to claim 4, in which transmission is performed on a number of frequencies larger than the number of digital processing units, and in which permanent transmission is to be provided at a beacon frequency, the base being characterized in that it includes a padding transmitter member (8) in addition to the transmission members associated with the digital processing units (4), the padding transmitter member being associated with a switching member including means for detecting relay messages from all of the digital processing units and for causing a padding signal to be transmitted at the beacon frequency when none of the other transmitter members is transmitting on the beacon frequency.
